# EUROPÄISCHE PATENTANMELDUNG

(11) **EP 4 664 658 A1**
(43) Veröffentlichungstag der Anmeldung: **17.12.2025**
(21) Anmeldenummer: 24182620.5
(22) Anmeldetag: 17.06.2024
(51) Int. Cl.: H01M 50/503, H01M 50/583

(54) **ZELLVERBINDER FÜR ELEKTRISCHE ZELLEN**

(30) Priorität: 14.06.2024 DE 102024116838
(71) Anmelder: fischer Power Solutions GmbH, 77855 Achern (DE)
(72) Erfinder: FISCHER, Julian, 77876 Kappelrodeck (DE)
(74) Vertreter: Gesthuysen Patentanwälte

(57) **Zusammenfassung**

Dargestellt und beschrieben ist ein Zellverbinder (1) für elektrische Zellen (3). Der Zellverbinder (1) weist ein Zellblech (11) und eine Mehrzahl an Kontaktzungen (12) auf. Jede der Kontaktzungen (12) ist zur Kontaktierung eines Zellkontakts (9, 10) einer elektrischen Zelle (3) ausgebildet.

Aufgabe der vorliegenden Erfindung ist die Angabe eines mechanisch unempfindlicheren Zellverbinders (1).

Die Aufgabe ist dadurch gelöst, dass jede der Kontaktzungen (12) im Zellblech (11) ausgebildet ist und in einem im Zellblech (11) ausgebildeten Streifen (13) mündet und dass jeder der Streifen (13) dimensioniert ist, dann abzuschmelzen, wenn ein Strom durch den Streifen (13) bei einer Umgebungstemperatur über einer Grenzdauer einen Grenzwert beträgt.

## Beschreibung

Die Erfindung betrifft zum einen einen Zellverbinder für elektrische Zellen, wobei der Zellverbinder ein Zellblech und eine Mehrzahl an Kontaktzungen aufweist. Dabei ist jede der Kontaktzungen zur Kontaktierung eines Zellkontakts einer elektrischen Zelle ausgebildet und mit dem Zellblech verbunden. Das Zellblech ist ein elektrischer Leiter.

Eine solche elektrische Zelle weist zum Beispiel ein zylinderförmiges Zellgehäuse auf. Das Zellgehäuse weist eine Zelllängsachse, einen Zellmantel, eine erste Zellkappe und eine zweite Zellkappe auf. Der Zellmantel ist konzentrisch um die Zelllängsachse angeordnet. Zylinderförmig meint eine Form eines allgemeinen Zylinders in der Mathematik. Zylinderförmig sind insbesondere Rundzellen und prismatische Zellen. Die erste Zellkappe schließt ein erstes Ende des Zellmantels ab und in der ersten Zellkappe ist ein erster elektrischer Zellkontakt. Die zweite Zellkappe schließt ein zweites Ende des Zellmantels ab und in der zweiten Zellkappe ist ein zweiter elektrischer Zellkontakt. Die erste und die zweite Zellkappe liegen folglich einander gegenüber. Der erste elektrische Zellkontakt und der zweite elektrische Zellkontakt sind mit einem elektrischen Energiespeicher im Zellgehäuse verbunden, sodass über den ersten elektrischen Zellkontakt und den zweiten elektrischen Zellkontakt dem elektrischen Energiespeicher elektrische Energie zuführbar und entnehmbar ist. Der elektrische Energiespeicher ist für gewöhnlich ein Akkumulator, zum Beispiel auf Basis von Lithium-Verbindungen.

Ein gattungsgemäßer Zellverbinder ist ausgebildet, Zellkontakte, und zwar entweder nur erste oder nur zweite Zellkontakte einer Mehrzahl von Zellen zu kontaktieren. Die Kontaktierung erfolgt mittels der Kontaktzungen. Jede der Kontaktzungen stellt eine elektrisch leitende Verbindung zwischen dem Zellblech und einem Zellkontakt einer Zelle her. Zum Beispiel weist ein Zellmodul einen ersten und einen zweiten gattungsgemäßen Zellverbinder und eine Mehrzahl von Zellen auf. Der erste Zellverbinder verbindet nur die ersten Zellkontakte der Zellen und der zweite Zellverbinder verbindet nur die zweiten Zellkontakte der Zellen. Folglich sind die Zellen elektrisch parallel geschaltet. Demnach dienen gattungsgemäße Zellverbinder der elektrischen Parallelschaltung einer Mehrzahl von elektrischen Zellen.

Im Betrieb eines solchen Zellmoduls kann es vorkommen, dass ein Strom durch eine der Zellen einen Grenzwert erreicht oder sogar überschreitet. Ein Erreichen oder Überschreiten des Grenzwerts über eine bestimmte Grenzdauer führt zu einer Beschädigung der Zelle und die Zelle kann thermisch durchgehen. Der Strom durch die Zelle erreicht oder überschreitet den Grenzwert über die Grenzdauer zum Beispiel durch einen zu hohen Lade- oder Entladestrom des Zellmoduls oder durch einen Kurzschluss in einer der anderen Zellen des Zellmoduls.

Aus dem Stand der Technik ist ein gattungsgemäßer Zellverbinder bekannt, bei welchem jede der Kontaktzungen ein Draht ist. Jeder der Drähte ist ausgebildet, bei einem Strom durch den Draht in Höhe des Grenzwerts über eine Dauer in Höhe der Grenzdauer abzuschmelzen. In Bezug auf das beispielhafte Zellmodul wird durch ein Abschmelzen des Drahts eine elektrisch leitende Verbindung zwischen dem Zellblech und dem Zellkontakt der Zelle durch den Draht unterbrochen, wodurch kein Strom mehr durch die Zelle fließen kann. Der aus dem Stand der Technik bekannte Zellverbinder hat verschiedene Nachteile. So sind die Drähte empfindlich für mechanische Einwirkungen, wie Vibrationen und Schock, und auch thermische Schwankungen. Auch sind die Drähte empfindlich für Korrosion.

Aufgabe der vorliegenden Erfindung ist daher die Angabe eines Zellverbinders, welcher wenigstens einen der beschriebenen Nachteile zumindest abmildert.

Die Aufgabe ist durch einen Zellverbinder mit den Merkmalen von Anspruch 1 gelöst. Der erfindungsgemäße Zellverbinder ist dadurch gekennzeichnet, dass jede der Kontaktzungen im Zellblech ausgebildet ist und in einem im Zellblech ausgebildeten Streifen mündet. Die Ausbildung der Kontaktzungen und der Streifen im Zellblech bedeutet, dass diese aus dem Zellblech bestehen. Jeder der Streifen liegt zwischen einer der Kontaktzungen um dem übrigen Zellblech. Vorzugsweise liegen die Streifen und das übrige Zellblech abgesehen von den Kontaktzungen in einer Ebene. Weiter ist der Zellverbinder dadurch gekennzeichnet, dass jeder der Streifen dimensioniert ist, dann abzuschmelzen, wenn ein Strom durch den Streifen bei einer Umgebungstemperatur über einer Grenzdauer einen Grenzwert beträgt. Die Dimensionierung des Streifens erfolgt insbesondere durch eine Einstellung einer Breite über eine Strecke des Streifens. Eine Dicke des Zellblechs ist gegeben. Die Umgebungstemperatur ist zum Beispiel durch die Anwendung des Zellverbinders bestimmt. Wenn also im Betrieb des Zellverbinders zum Beispiel im bespielhaften Zellmodul bei der Umgebungstemperatur ein Strom in Höhe des Grenzwerts über eine Dauer in Höhe der Grenzdauer durch einen der Streifen fließt, dann schmilzt dieser Streifen ab, wodurch der Streifen keinen Strom mehr leiten kann. Demnach sind die Streifen als Schmelzsicherungen ausgebildet. Im Vergleich zum Stand der Technik sind die Streifen unempfindlicher für mechanische Einwirkungen, thermische Schwankungen und auch Korrosion. Weiter ist im beispielhaften Zellmodul mit dem erfindungsgemäßen Zellverbinder ein elektrischer Widerstand zwischen dem Zellblech und einem Zellkontakt einer der Zellen geringer als im Stand der Technik. Denn während im Stand der Technik jeder der Drähte zwei Verbindungen hat, weist jeder der Streifen nur eine Verbindung auf. Jeder der Drähte weist zum einen eine Verbindung mit einem Zellkontakt einer der Zellen und zum anderen eine Verbindung mit dem Zellblech auf. Im Gegensatz dazu weist jeder der Streifen nur eine Verbindung, und zwar zu einem Zellkontakt einer der Zelle auf. Eine Verbindung weist grundsätzlich einen höheren Widerstand auf als ein entsprechender einstückiger Leiter.

In einer Ausgestaltung des Zellverbinders ist das Zellblech einstückig. Demnach ist das Zellblech aus einem einzigen Blech hergestellt. Ein Vorteil der Einstückigkeit ist Einfachheit.

Der Zellverbinder kann auf verschiedene Arten und Weisen hergestellt sein. In einer Ausgestaltung sind die Kontaktzungen und/oder die Streifen durch ein Laser-Schneiden aus dem Zellblech ausgeschnitten. In einer anderen Ausgestaltung sind die Kontaktzungen und/oder die Streifen aus dem Zellblech ausgestanzt. Laser-Schneiden ist flexibler, aber teurer als Stanzen. Stanzen ist unflexibler, aber preiswerter als Laser-Schneiden. Somit ist Laser-Schneiden vorteilhaft, wenn kleinere Stückzahlen und ist Stanzen vorteilhaft, wenn größere Stückzahlen des Zellverbinders herzustellen sind.

In einer weiteren Ausgestaltung enden die Kontaktzungen in einer Kontaktebene parallel zu einer Zellblechebene des Zellblechs. Die Kontaktebene und die Zellblechebene sind voneinander beabstandet und die Kontaktzungen sind federnd. Die Federeigenschaft der Kontaktzungen ergibt sich aus einer Elastizität des Zellblechs. Wenn der Zellverbinder dann zum Beispiel in dem beispielhaften Zellmodul verwendet wird, ist jede der Kontaktzungen in Kontakt mit einem Zellkontakt einer der elektrischen Zellen und übt eine Kraft auf den Zellkontakt aus. Folglich stellt die Kontaktzunge eine elektrische Verbindung zwischen dem Zellblech und der Zelle her.

In einer Ausgestaltung des Zellverbinders ist jede der Kontaktzungen zum Verschweißen mit einem Zellkontakt ausgebildet. Vorzugsweise ist das Verschweißen ein Laser-Verschweißen. Diese geschweißten Verbindungen zum Beispiel im beispielhaften Zellmodul sind zuverlässiger, als wenn sie nur durch die Federeigenschaft der Kontaktzungen bestehen.

In einer weiteren Ausgestaltung ist das Zellblech aus Kupfer oder einer Kupferlegierung oder einer Aluminiumlegierung oder einer metallischen Legierung. Vorzugsweise ist das Zellblech vernickelt. Kupfer und Kupferlegierungen weisen gute elektrische Eigenschaften auf und eine Vernickelung des Zellblechs schützt eine Oberfläche des Zellblech gegen Umwelteinflüsse. Eine Temperatur einer elektrischen Zelle muss in einem bestimmten Temperaturbereich liegen, damit die Zelle zum einen ihre maximale Leistungsfähigkeit und zum anderen ihre maximale Lebensdauer erreicht. Für eine solche Temperierung der elektrischen Zelle ist diese zum Beispiel in unmittelbaren Kontakt mit einem Temperiermedium. Ein Temperiermedium ist ein flüssiges Medium zum Kühlen oder Erwärmen von Zellen. Folglich sind das Temperiermedium und ein Material der Zelle kompatibel miteinander. Ein Temperiermedium dient also dem Transport von Wärme. Diese Art einer Temperierung einer Zelle wird als Immersionstemperierung oder auch als Immersionskühlung bezeichnet. In einer weiteren Ausgestaltung des Zellverbinders ist dieser für Immersionstemperierung mit einem Temperiermedium ausgebildet. Die Ausbildung ist insbesondere dahingehend, dass ein Material des Zellverbinders und das Temperiermedium kompatibel miteinander sind. Als Material bieten sich insbesondere die zuvor erwähnten Materialien an. Damit ist das zuvor beschriebene Zellmodul für Immersionstemperierung geeignet.

Die Dimensionierung der Streifen erfolgt auch unter Berücksichtigung der Umgebungstemperatur. Um einen Einfluss der Umgebungstemperatur zur reduzieren, weist der Zellverbinder in einer weiteren Ausgestaltung eine Abdeckung zur thermischen Isolation auf. Vorzugsweise ist die Abdeckung auch zur mechanischen Stabilisierung insbesondere der Streifen geeignet. Die Abdeckung ist auf dem Zellblech angeordnet und deckt zumindest die Streifen des Zellblechs ab. Für gewöhnlich ist die Abdeckung in unmittelbarem Kontakt zumindest mit den Streifen, wodurch diese thermisch isoliert und mechanisch stabilisiert sind. Die Abdeckung und das Zellblech sind zum Beispiel miteinander verklebt.

Diese Ausgestaltung ist insbesondere bei gleichzeitiger Umsetzung der zuvor beschriebenen Immersionstemperierung vorteilhaft. Denn wenn ein Temperiermedium in unmittelbarem Kontakt mit den Streifen ist, dann ist ein besonders großer Transport von Wärme von den Streifen in das Temperiermedium gegeben. Folglich ist eine Querschnittsfläche der Streifen bei Immersionskühlung geringer als ohne Immersionskühlung, um ein Abschmelzen der Streifen bei einem Strom mit dem Grenzwert über die Grenzdauer zu gewährleisten. Diese geringere Querschnittsfläche schwächt jedoch die Streifen, wodurch sie empfindlicher für mechanische Einwirkungen sind. Durch die Abdeckung sind die Streifen thermisch isoliert, weshalb sie nicht die geringere Querschnittsfläche aufweisen.

In einer Weiterbildung der vorstehenden Ausgestaltung weist das Zellblech eine erste Blechseite und eine der ersten Blechseite gegenüberliegende zweite Blechseite auf. Weiter weist die Abdeckung eine erste Teilabdeckung und eine zweite Teilabdeckung auf. Die erste Teilabdeckung ist auf der ersten Blechseite und die zweite Teilabdeckung ist auf der zweiten Blechseite angeordnet. Durch die Anordnung der Abdeckung auf beiden Seiten des Zellblechs ist die thermische Isolation und die mechanische Stabilisierung besonders gut. In einer Ausgestaltung der Abdeckung ist diese aus einem Kunststoff. In einer weiteren Ausgestaltung ist die Abdeckung aus einem Schaum. Bevorzugt ist es ein Polyurethanschaum und besonders bevorzugt ein mit einem Flammhemmer additivierter Polyurethanschaum. Gerade ein Polyurethanschaum ist vorteilhaft, da Polyurethanschäume elektrisch und thermisch isolierend und nicht brennbar sind. Flammhemmer nehmen thermische Energie auf.

Die Erfindung betrifft zum anderen einen weiteren Zellverbinder für elektrische Zellen, wobei der Zellverbinder ebenfalls ein Zellblech und eine Mehrzahl an Kontaktzungen aufweist. Auch hier ist jede der Kontaktzungen zur Kontaktierung eines Zellkontakts einer elektrischen Zelle ausgebildet und mit dem Zellblech verbunden. Allerdings ist hier jede der Kontaktzungen ein Draht.

Die Aufgabe ist auch durch einen weiteren Zellverbinder mit den Merkmalen von Anspruch 13 gelöst. Der erfindungsgemäße weitere Zellverbinder ist dadurch gekennzeichnet, dass jeder der Drähte eine Ummantelung zur thermischen Isolation und mechanischen Stabilisierung aufweist und dimensioniert ist, dann abzuschmelzen, wenn ein Strom durch den Draht bei einer Umgebungstemperatur über einer Grenzdauer einen Grenzwert beträgt. Die Drähte sind elektrische Leiter. Die Dimensionierung der Drähte erfolgt insbesondere durch eine Einstellung eines Durchmessers der Drähte, da eine Länge der Drähte gegeben ist. Wenn also im Betrieb des weiteren Zellverbinders bei der Umgebungstemperatur ein Strom in Höhe des Grenzwerts über eine Dauer in Höhe der Grenzdauer durch einen der Drähte fließt, dann schmilzt dieser Draht ab, wodurch der Draht keinen Strom mehr leiden kann. Demnach sind die Drähte als Schmelzsicherung ausgelegt. Im Vergleich zum Stand der Technik sind die Drähte unempfindlicher für mechanische Einwirkungen, thermische Schwankungen und auch Korrosion.

In einer Ausgestaltung des weiteren Zellverbinders ist jeder der Drähte mit dem Zellblech durch eine Schweißverbindung verbunden. Vorzugsweise sind die Schweißverbindungen Laser-Schweißverbindungen. Durch Verschweißen werden die Verbindungen besonders zuverlässig, insbesondere bei mechanischer Einwirkung und Schock. Laser-Schweißverbindungen sind ausgesprochen schnell und reproduzierbar herstellbar.

In einer weiteren Ausgestaltung ist jeder der Drähte zum Verschweißen, vorzugsweise Laser verschweißen mit einem Zellkontakt ausgebildet.

In einer weiteren Ausgestaltung ist der weitere Zellverbinder für Immersionstemperierung mit einem Temperiermedium ausgebildet. Die Ausbildung ist insbesondere dahingehend, dass ein Material des Zellblechs, ein Material des Drahts und ein Material der Ummantelungen und das Temperiermedium kompatibel miteinander sind.

In einer weiteren Ausgestaltung sind die Ummantelungen aus einem Kunststoff. In einer weiteren Ausgestaltung sind die Ummantelungen aus einem Schaum. Bevorzugt sind sie aus einem Polyurethanschaum und besonders bevorzugt aus einem mit einem Flammhemmer additivierten Polyurethanschaum.

In einer weiteren Ausgestaltung ist zumindest eine der Ummantelungen ein Kabelmantel oder ein Klebefleck. Vorzugsweise ist der Klebefleck ein Ein- oder Zweikomponentenkunststoff oder ein Harz. Diese werden flüssig über zumindest einen der Drähte getropft und härten dann aus, wodurch sich die Ummantelung ergibt.

Im Übrigen gelten die Ausführungen für den Zellverbinder auch für den weiteren Zellverbinder und umgekehrt.

Im Einzelnen ist eine Vielzahl von Möglichkeiten gegeben, die Zellverbinder auszugestalten und weiterzubilden. Dazu wird verwiesen sowohl auf die den unabhängigen Ansprüchen nachgeordneten Ansprüche als auch auf die nachfolgende Beschreibung von bevorzugten Ausführungsbeispielen in Verbindung mit der Zeichnung. In der Zeichnung zeigt
- Figur 1a: eine erste perspektivische Ansicht einer ersten Blechseite eines Ausführungsbeispiel eines Zellverbinders,
- Figur 1b: einen Ausschnitt aus Figur 1a,
- Figur 1c: eine zweite perspektivische Ansicht des Zellverbinders,
- Figur 1d: eine dritte perspektivischen Ansicht der ersten Blechseite des Zellverbinders mit einer Abdeckung,
- Figur 2a: eine erste perspektivische Ansicht einer zweiten Blechseite des Zellverbinders,
- Figur 2b: einen Ausschnitt aus Figur 2a,
- Figur 2c: eine zweite perspektivische Ansicht der zweiten Blechseite des Zellverbinders mit der Abdeckung,
- Figur 3a: eine perspektivische Ansicht eines Ausführungsbeispiels eines weiteren Zellverbinders,
- Figur 3b: einen Ausschnitt aus Figur 3a,
- Figur 4a: eine erste perspektivische Ansicht eines Ausführungsbeispiels einer elektrischen Zelle und
- Figur 4b: eine zweite perspektivische Ansicht der Zelle.

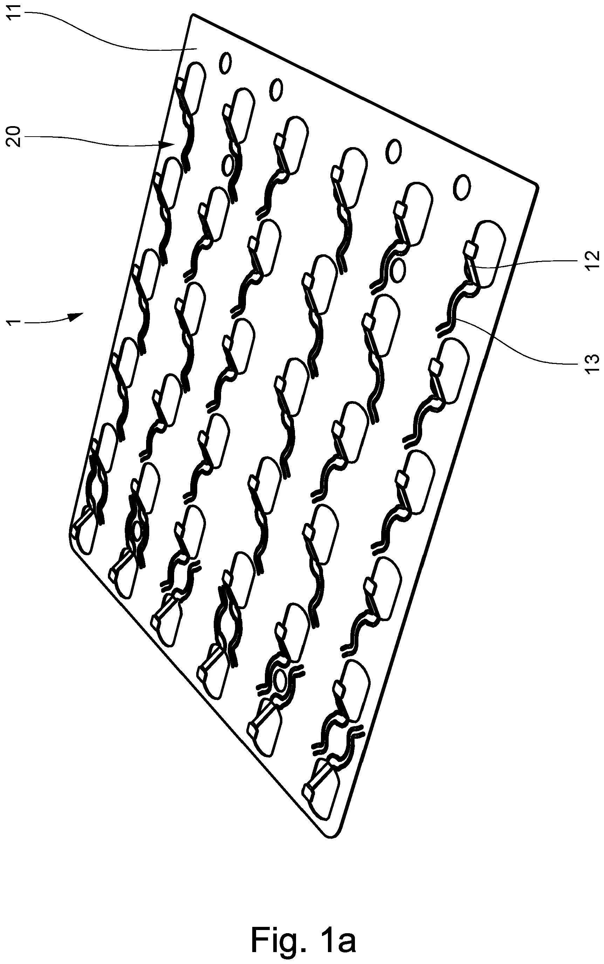

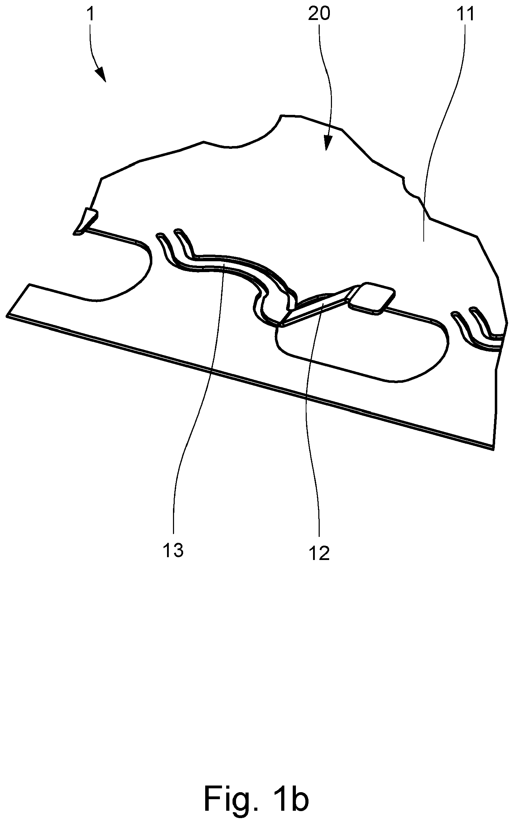

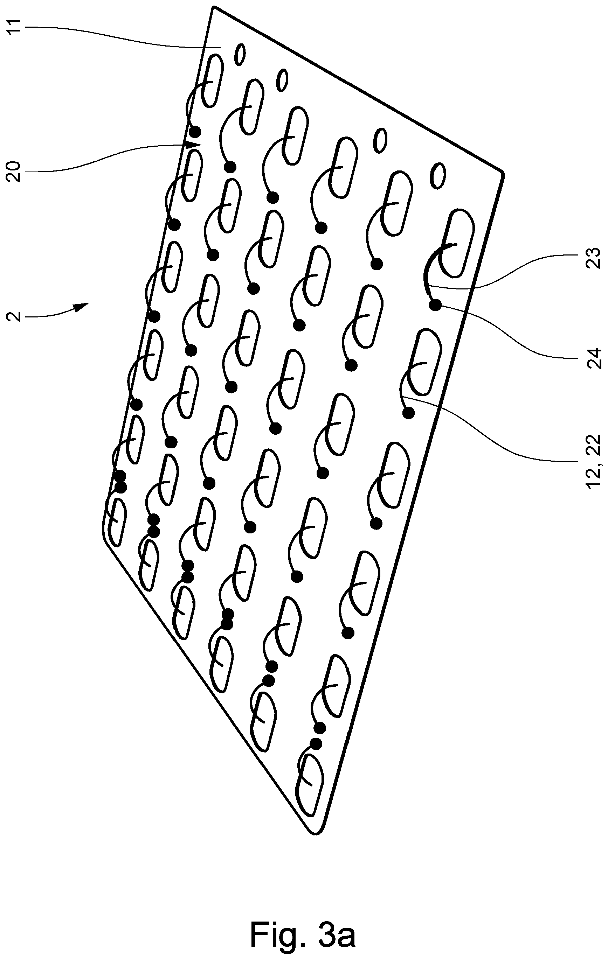

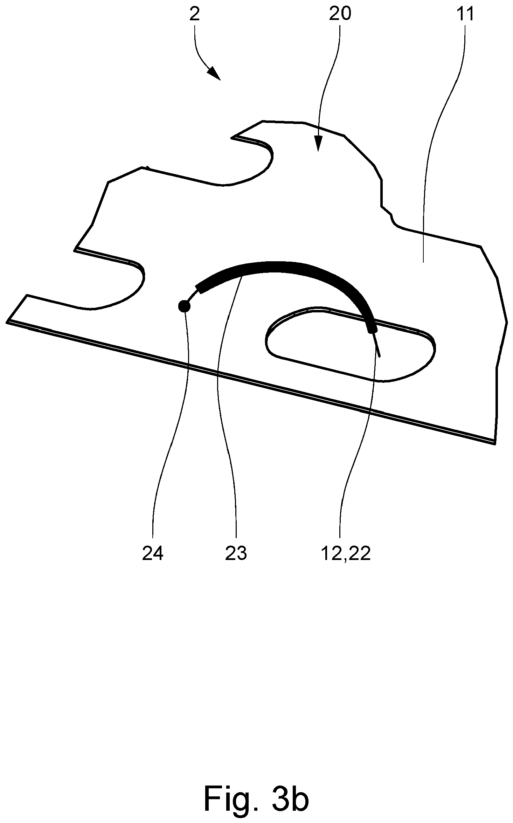

Die Figuren 1a bis 2c zeigen ein Ausführungsbeispiel eines Zellverbinders 1 und die Figuren 3a und 3b ein Ausführungsbeispiel eines weiteren Zellverbinders 2 für elektrische Zellen 3.

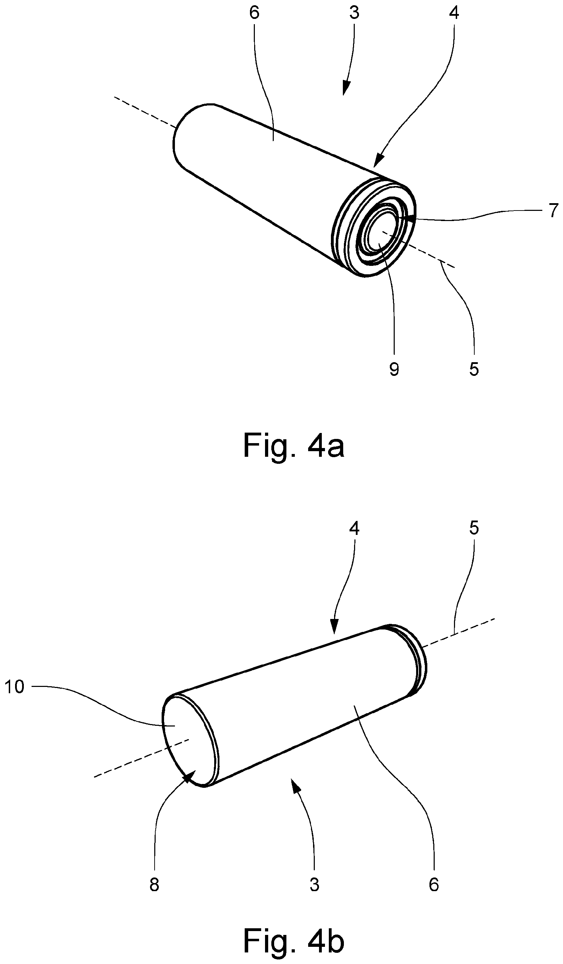

Die Figuren 4a und 4b zeigen ein Ausführungsbeispiel einer solchen elektrischen Zelle 3. Die Zelle 3 weist ein zylinderförmiges Zellgehäuse 4 auf. Das Zellgehäuse 4 weist eine Zelllängsachse 5, einen Zellmantel 6, eine erste Zellkappe 7 und eine zweite Zellkappe 8 auf. Die erste Zellkappe 7 schließt ein erstes Ende des Zellmantels 6 ab und in der ersten Zellkappe 7 ist ein erster elektrischer Zellkontakt 9. Die zweite Zellkappe 8 schließt ein zweites Ende des Zellmantels 6 ab und in der zweiten Zellkappe 8 ist ein zweiter elektrischer Zellkontakt 10. Der erste elektrische Zellkontakt 9 und der zweite elektrische Zellkontakt 10 liegen einander gegenüber. In diesem Ausführungsbeispiel ist die Zelle 3 eine Rundzelle. Der Zellmantel 6 hat also eine kreisrunde Querschnittskontur in einer Ebene senkrecht zur Zelllängsachse 5 konzentrisch um die Zelllängsachse 5.

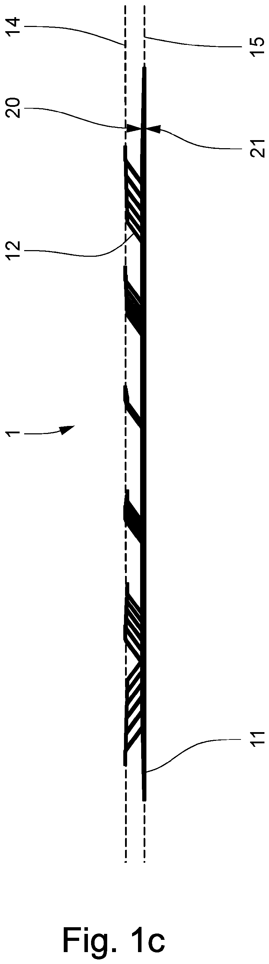

Der Zellverbinder 1 für elektrische Zellen 3, siehe Figuren 1a bis 2c, weist ein Zellblech 11 und eine Mehrzahl an Kontaktzungen 12 auf. Das Zellblech 11 ist aus Kupfer und vernickelt. Dadurch ist das Zellblech 11 für Immersionstemperierung mit einem Temperierungsmedium ausgebildet. Jede der Kontaktzungen 12 ist zur Kontaktierung eines Zellkontakts, und zwar entweder eines ersten Zellkontakt 9 oder eines zweiten Zellkontakt 10 einer elektrischen Zelle 3 ausgebildet. Jede der Kontaktzungen 12 ist im Zellblech 11 ausgebildet und mündet in einem im Zellblech 11 ausgebildeten Streifen 13. Jeder der Streifen 13 ist dimensioniert, dann abzuschmelzen, wenn ein Strom durch den Streifen 13 bei einer Umgebungstemperatur über einer Grenzdauer einen Grenzwert beträgt. Das Zellblech 11 ist einstückig. Die Einstückigkeit ist gegeben, da die Kontaktzungen 12 und die Streifen 13 durch Laser-Schneiden aus dem Zellblech 11 ausgeschnitten sind. Die Kontaktzungen 12 enden in einer Kontaktebene 14, welche parallel zu einer Zellblechebene 15 liegt, in welcher das Zellblech 11 liegt, siehe Figur 1c. Die Streifen 13 liegen in der Zellblechebene 15 und die Kontaktzungen 12 liegen außerhalb der Zellblechebene 15. Jede der Kontaktzungen 12 ist zum Laser-Verschweißen mit einem ersten Zellkontakt 9 oder einem zweiten Zellkontakt 10 ausgebildet. Die Kontaktzungen 12 sind durch ein Biegeverfahren aus der Zellblechebene 15 in die Kontaktebene 14 gebogen.

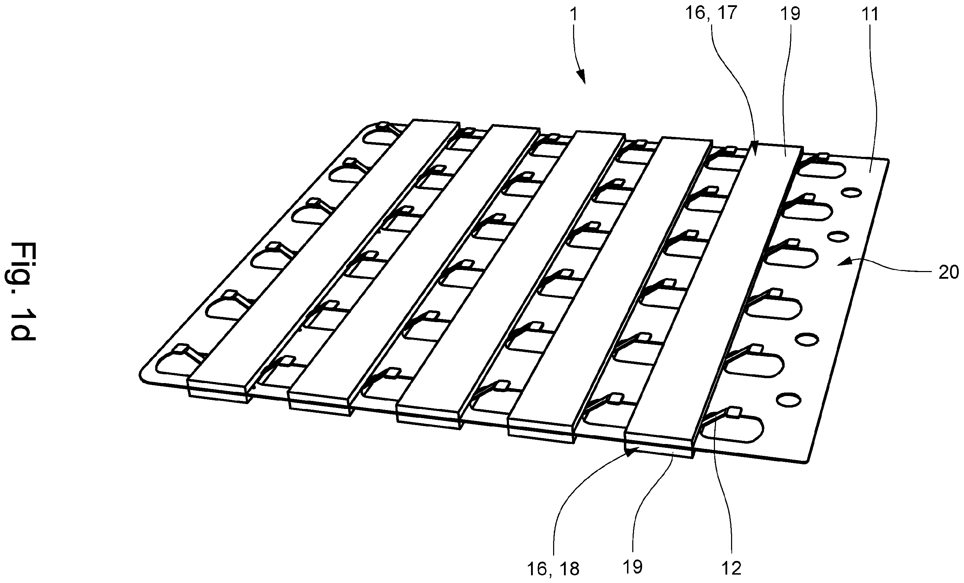

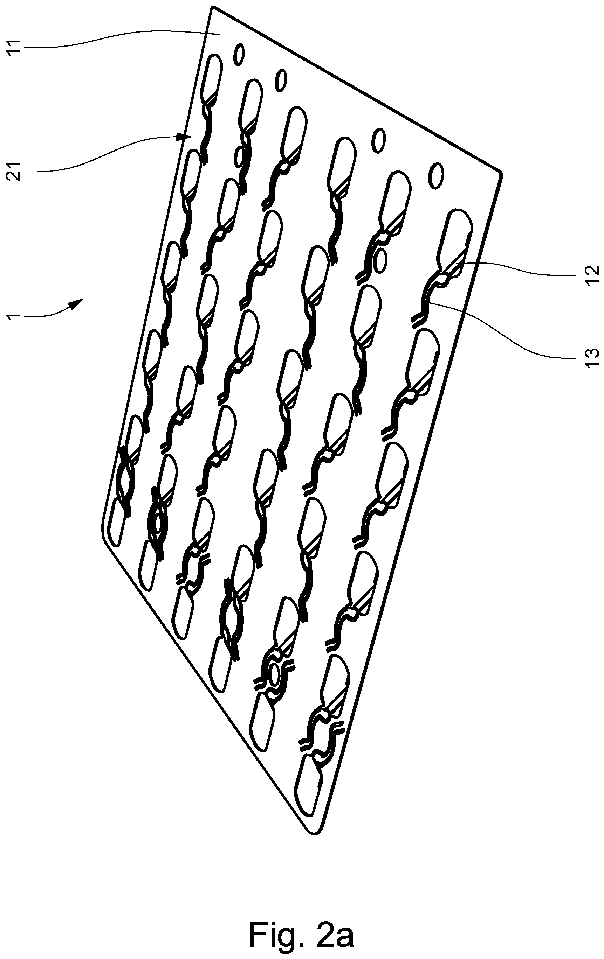

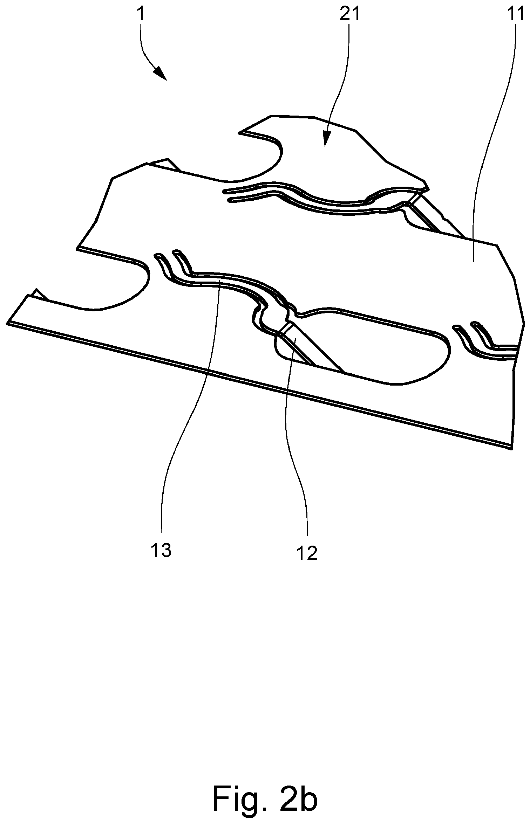

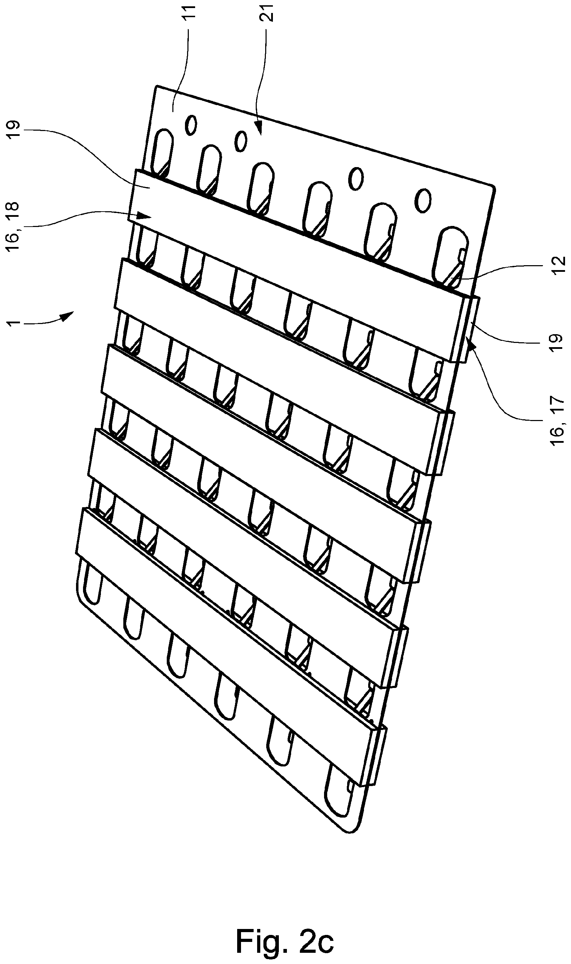

Der Zellverbinder 1 weist eine Abdeckung 16 zur thermischen Isolation und mechanischen Stabilisierung auf, siehe Figuren 1d und 2c. Die Abdeckung 16 weist eine erste Teilabdeckung 17 und eine zweite Teilabdeckung 18 auf. Die erste Teilabdeckung 17 und die zweite Teilabdeckung 18 bestehen jeweils aus mehreren Segmenten 19. Die Segmente 19 bestehen aus einem Polyurethanschaum, welcher ebenfalls für das Temperierungsmedium geeignet ist, und haben eine Form von Quadern. Folglich ist der Zellverbinder 1 für Immersionstemperierung mit dem Temperiermedium ausgebildet. Das Zellblech 11 weist eine erste Blechseite 20 und eine der ersten Blechseite 20 gegenüberliegende zweite Blechseite 21 auf. Die Segmente 19 der ersten Teilabdeckung 17 sind auf der ersten Blechseite 20 und die Segmente 19 der zweiten Teilabdeckung 18 sind auf der zweiten Blechseite 21 angeordnet, und zwar über den Streifen 13. Dadurch sind die Streifen 13 thermisch isoliert und mechanisch stabilisiert. Die Segmente 19 und das Zellblech 11 sind miteinander verklebt. Der weitere Zellverbinder 2 für elektrische Zellen 3, siehe Figuren 3a und 3b, weist ebenfalls ein Zellblech 11 und eine Mehrzahl an Kontaktzungen 12 auf. Jede der Kontaktzungen 12 ist zur Kontaktierung eines ersten elektrischen Zellkontakts 9 oder eines zweiten elektrischen Zellkontakts 10 einer elektrischen Zelle 3 ausgebildet. Im Gegensatz zum Zellverbinder 1 sind die Kontaktzungen 12 beim weiteren Zellverbinder 2 jedoch keine Streifen 13, sondem Drähte 22.

Jeder der Drähte 22 weist eine Ummantelung 23 zur thermischen Isolation und mechanischen Stabilisierung auf. In Figur 3a ist nur einer der Drähte 22 mit einer Ummantelung 23 dargestellt. Weiter ist jeder der Drähte 22 dimensioniert, dann abzuschmelzen, wenn ein Strom durch den Draht 22 bei einer Umgebungstemperatur über einer Grenzdauer einen Grenzwert beträgt. Die Drähte 22 sind mit dem Zellblech 11 durch Laser-Schweißverbindungen 24 verbunden. Die Ummantelungen 23 sind aus einem Polyurethanschaum. Die Drähte 22 und die Ummantelungen 23 sind für das Temperierungsmedium geeignet, weshalb auch der weitere Zellverbinder 2 für Immersionstemperierung mit dem Temperierungsmedium ausgebildet ist.

Im Übrigen gelten die Ausführungen für den weiteren Zellverbinder 2 entsprechend für den Zellverbinder 1 und umgekehrt.

In den Figuren sind die Kontaktzungen 12, die Streifen 13, die Abdeckung 16, die erste Teilabdeckung 17, die zweite Teilabdeckung 18, die Segmente 19, die Drähte 22, die Ummantelungen 23 und die Laser-Schweißverbindungen 24 beispielhaft mit Bezugszeichen versehen.

### Bezugszeichen

- 1: Zellverbinder
- 2: weiterer Zellverbinder
- 3: elektrische Zelle
- 4: Zellgehäuse
- 5: Zelllängsachse
- 6: Zellmantel
- 7: erste Zellkappe
- 8: zweite Zellkappe
- 9: erster elektrischer Zellkontakt
- 10: zweiter elektrischer Zellkontakt
- 11: Zellblech
- 12: Kontaktzunge
- 13: Streifen
- 14: Kontaktebene
- 15: Zellblechebene
- 16: Abdeckung
- 17: erste Teilabdeckung
- 18: zweite Teilabdeckung
- 19: Segment
- 20: erste Blechseite
- 21: zweite Blechseite
- 22: Draht
- 23: Ummantelung
- 24: Laser-Schweißverbindung

## Patentansprüche

1. Zellverbinder (1) für elektrische Zellen (3), wobei der Zellverbinder (1) ein Zellblech (11) und eine Mehrzahl an Kontaktzungen (12) aufweist und wobei jede der Kontaktzungen (12) zur Kontaktierung eines Zellkontakts (9, 10) einer elektrischen Zelle (3) ausgebildet ist,
**dadurch gekennzeichnet,**
**dass** jede der Kontaktzungen (12) im Zellblech (11) ausgebildet ist und in einem im Zellblech (11) ausgebildeten Streifen (13) mündet und
**dass** jeder der Streifen (13) dimensioniert ist, dann abzuschmelzen, wenn ein Strom durch den Streifen (13) bei einer Umgebungstemperatur über einer Grenzdauer einen Grenzwert beträgt.

2. Zellverbinder (1) nach Anspruch 1, **dadurch gekennzeichnet, dass** das Zellblech (11) einstückig ist.

3. Zellverbinder (1) nach Anspruch 1 oder 2, **dadurch gekennzeichnet, dass** die Kontaktzungen (12) und/oder die Streifen (13) durch Laser-Schneiden aus dem Zellblech (11) ausgeschnitten sind.

4. Zellverbinder (1) nach Anspruch 1 oder 2, **dadurch gekennzeichnet, dass** die Kontaktzungen (12) und/oder die Streifen (13) aus dem Zellblech (11) ausgestanzt sind.

5. Zellverbinder nach einem der Ansprüche 1 bis 4, **dadurch gekennzeichnet, dass** die Kontaktzungen (12) in einer Kontaktebene (14) parallel zur einer Zellblechebene (15) des Zellblechs (11) enden.

6. Zellverbinder (1) nach einem der Ansprüche 1 bis 5, **dadurch gekennzeichnet, dass** jede der Kontaktzungen (12) zum Verschweißen, vorzugsweise Laser-Verschweißen mit einem Zellkontakt (9, 10) ausgebildet ist.

7. Zellverbinder (1) nach einem der Ansprüche 1 bis 6, **dadurch gekennzeichnet, dass** das Zellblech (11) aus Kupfer oder einer Kupferlegierung oder einer Aluminiumlegierung oder einer metallischen Legierung und vorzugsweise vernickelt ist.

8. Zellverbinder (1) nach einem der Ansprüche 1 bis 7, **dadurch gekennzeichnet, dass** der Zellverbinder (1) für Immersionstemperierung mit einem Temperiermedium ausgebildet ist.

9. Zellverbinder (1) nach einem der Ansprüche 1 bis 8, **dadurch gekennzeichnet, dass** der Zellverbinder (1) eine Abdeckung (16) zur thermischen Isolation und/oder mechanischen Stabilisierung aufweist, die Abdeckung (16) auf dem Zellblech (11) angeordnet ist und zumindest die Streifen (13) des Zellblechs (11) abgedeckt.

10. Zellverbinder (1) nach Anspruch 9, **dadurch gekennzeichnet, dass** das Zellblech (11) eine erste Blechseite (20) und eine der ersten Blechseite (20) gegenüberliegende zweite Blechseite (21) aufweist, dass die Abdeckung (16) eine erste Teilabdeckung (17) und eine zweite Teilabdeckung (18) aufweist, dass die erste Teilabdeckung (17) auf der ersten Blechseite (20) und die zweite Teilabdeckung (18) auf der zweiten Blechseite (21) angeordnet ist.

11. Zellverbinder (1) nach Anspruch 9 oder 10, **dadurch gekennzeichnet, dass** die Abdeckung (16) aus einem Kunststoff ist.

12. Zellverbinder (1) nach Anspruch 9 oder 10, **dadurch gekennzeichnet, dass** die Abdeckung (16) aus einem Schaum, bevorzugt aus einem Polyurethanschaum und besonders bevorzugt aus einem mit einem Flammhemmer additivierten Polyurethanschaum ist.

13. Zellverbinder (2) für elektrische Zellen (3), wobei der Zellverbinder (2) ein Zellblech (11) und eine Mehrzahl an Kontaktzungen (12) aufweist und wobei jede der Kontaktzungen (12) zur Kontaktierung eines Zellkontakts (9, 10) einer elektrischen Zelle (3) ausgebildet und ein Draht (22) ist,
**dadurch gekennzeichnet,**
**dass** jeder der Drähte (22) eine Ummantelung (23) zur thermischen Isolation und mechanischen Stabilisierung aufweist und dimensioniert ist, dann abzuschmelzen, wenn ein Strom durch den Draht (22) bei einer Umgebungstemperatur über einer Grenzdauer einen Grenzwert beträgt.

14. Zellverbinder (2) nach Anspruch 13, **dadurch gekennzeichnet, dass** jeder der Drähte (22) mit dem Zellblech (11) durch eine Schweißverbindung, vorzugsweise eine Laser-Schweißverbindung (24) verbunden ist.

15. Zellverbinder (2) nach Anspruch 13 oder 14, **dadurch gekennzeichnet, dass** der Zellverbinder (2) nach einem der Ansprüche 6 bis 8 ausgebildet ist.

16. Zellverbinder (2) nach einem der Ansprüche 13 bis 15, **dadurch gekennzeichnet, dass** die Ummantelungen (23) aus einem Kunststoff sind.

17. Zellverbinder (2) nach einem der Ansprüche 13 bis 15, **dadurch gekennzeichnet, dass** die Ummantelungen (23) aus einem Schaum, bevorzugt aus einem Polyurethanschaum und besonders bevorzugt aus einem mit einem Flammhemmer additivierten Polyurethanschaum sind.

18. Zellverbinder (2) nach einem der Ansprüche 13 bis 17, **dadurch gekennzeichnet, dass** zumindest eine der Ummantelungen (23) ein Kabelmantel oder ein Klebefleck ist und dass vorzugsweise der Klebefleck ein Ein- oder Zweikomponentenkunststoff oder ein Harz ist.
